# EUROPEAN PATENT SPECIFICATION

(11) **EP 2 839 145 B1**
(45) Date of publication and mention of the grant of the patent: **08.06.2016**
(21) Application number: 13726240.8
(22) Date of filing: 12.04.2013
(51) Int. Cl.: F03B 13/20, F03B 13/18

(54) **METHOD FOR CONVERTING THE ENERGY OF WATER WAVES INTO ELECTRICITY BY MEANS OF A WAVE POWER PLANT AND A WAVE POWER PLANT**
VERFAHREN ZUR UMWANDLUNG DER ENERGIE VON WASSERWELLEN IN ELEKTRIZITÄT MITTELS EINES WELLENKRAFTWERKS UND WELLENKRAFTWERK
PROCÉDÉ POUR CONVERTIR L'ÉNERGIE DES VAGUES EN ÉLECTRICITÉ AU MOYEN D'UNE CENTRALE HOULOMOTRICE, ET CENTRALE HOULOMOTRICE

(30) Priority: 17.04.2012 FI 20125413
(43) Date of publication of application: 25.02.2015
(73) Proprietor: Wello Oy, 02270 Espoo (FI)
(72) Inventor: PAAKKINEN, Heikki, FI-02270 Espoo (FI); PAAKKINEN, Antti, FI-02270 Espoo (FI)
(74) Representative: LEITZINGER OY
(86) International application number: PCT/FI2013/050402
(87) International publication number: WO 2013/156674

(56) References cited:
- GB-A- 2 248 689
- GB-A- 2 410 299
- US-B1- 7 375 436

## Description

The invention relates to a method according to the preamble of claim 1 for converting the energy of water waves into electricity by means of a wave power plant. The invention also relates to a wave power plant according to the preamble of claim 5.

From the publications EP 1 384 824 B1 and WO2005/071257 A1 is known a similar method in which the moment of momentum of the rotation of the gyro is used to generate the torque of the rotator when the gyro shaft is rolled by means of the waves. The problem with these known wave power plants is that the torque enhancing the rotation of the rotator shaft is received on it only for a short time, twice during a full rotation of the rotator, whereas at the intermediate stages, when the gyro shaft turns, the moment of momentum of the rotation of the gyro generates a torque which inclines the body. If the body is able to incline in the direction of the torque, it will perform unnecessary work and brake the rotation of the rotator. It is thus difficult to make the rotator rotate in step with the waves and it is difficult to make the body of the wave power plant roll in step with the waves. The operation of the wave power plant is relatively inefficient and it is difficult to make the power plant function in irregular waves.

From the publication US 7,375,436 B1 is further known a wave power plant, wherein the moment produced by the gyro force, which is generated when the power plant inclines (rolls), is used for rotating the rotator. In the publication is studied the power output of the plant with different rotation speeds of the gyro in relation to wave frequency. The moment rotating the rotator is obtained pulsatingly twice during the revolution, that is, it is irregular and it is difficult to synchronise the rotation of the rotator with the frequency of the wave in varying wave conditions. The effective output is also modest. The output is deteriorated especially by the fact that the floating body inclines according to the direction of the surface of the wave, whereby the moments produced by horizontal accelerations occur at a stage where they, for the most part, cancel the moments produced by inclination and gravitation. Thus, only the gyro force can be utilised.

The aim of the present invention is to provide an improved method and a wave power plant by means of which the problems of the above-mentioned known wave power plants can be solved. The aim of the invention is especially to improve the effective output and operational preconditions of the wave power plant in varying wave conditions. For this purpose, the idea of the invention has been to create conditions for the inclination of the body and the horizontal accelerations to coincide at such stage that the moments of inclination/gravitation and acceleration will intensify one another and in addition coincide at a push-pull phase with the gyro force moment, thus providing a high and relatively uniform moment and a good effective output.

This aim is achieved with the method according to the invention, by means of the characteristics disclosed in the appended claim 1. The aim is also achieved by means of the wave power plant according to the invention, on the basis of the characteristics disclosed in the appended claim 8. The dependent claims disclose preferred embodiments of the invention.

The wave power plant according to the invention produces a relatively uniform output with good efficiency irrespective of the size of the wave, because the length/height dimensions of the most frequently occurring typical natural waves are more or less constant.

In the invention, the inclination of the floating body is caused in a manner deviating from the direction of the surface of the wave by means of the internal flows of the wave, which are directed at the submerged part of the body. This submerged part of the body extends so deep down that the internal opposing flows of the wave occur at different heights of the body, on different sides of the body. In this case, the inclination moment and the acceleration moment intensify one another and coincide at a push-pull phase with the gyro moment.

In the wave power plant according to the invention, a rotator suitable for gravitational power take-off may be substantially lighter than, for example, in the wave power plant disclosed in the publication WO2010/034888, because a part of the rotator's torque is generated by the moment of momentum (spin angular momentum) of the gyro. With the invention is achieved particularly great advantage with respect to known wave power plants due to the fact that the moments produced by inclination and acceleration are summed up into a dead mass torque and the torque generated by the gyro and the torque generated by the dead mass alternate during the revolution of the rotator and each torque acts twice during a revolution, whereby torques repeated typically at approximately 90° intervals are obtained, which aim to rotate the rotator in the same direction of rotation. The direction of rotation of the gyro determines the direction of rotation of the rotator, which is thus selectable.

When the body is designed as a vertical or an inclined wall submerged sufficiently deeply, by utilising the internal flows of the wave, the inclination stage of the body can be made such that also the moment produced by horizontal acceleration can be utilised, which is not possible with bodies floating according to the direction of the wave surface. By means of the invention is also obtained as uniform and efficient a torque as possible for the duration of the whole revolution.

The invention is described in greater detail in the following, with reference to the accompanying drawings, in which:
- Figure 1: shows a diagrammatic side view of the body of the wave power plant according to one embodiment of the invention;
- Figure 2: shows a front view of the body according to Figure 1;
- Figure 3: shows a top view of the body according to Figure 1;
- Figure 4: shows an oblique top rear view of the body according to Figure 1;
- Figure 5: shows a diagrammatic top view of the power plant units of the wave power plant according to one embodiment of the invention;
- Figure 6: shows a perspective view of a rotator (without a floating body) comprised in the power plant unit of the wave power plant according to another embodiment of the invention;
- Figure 7: shows a control device relating to the wave power plant of Figure 6; and
- Figure 8: shows the different components of the torque generated by the wave power plant according to the invention as a function of the position of the rotator in the revolution.

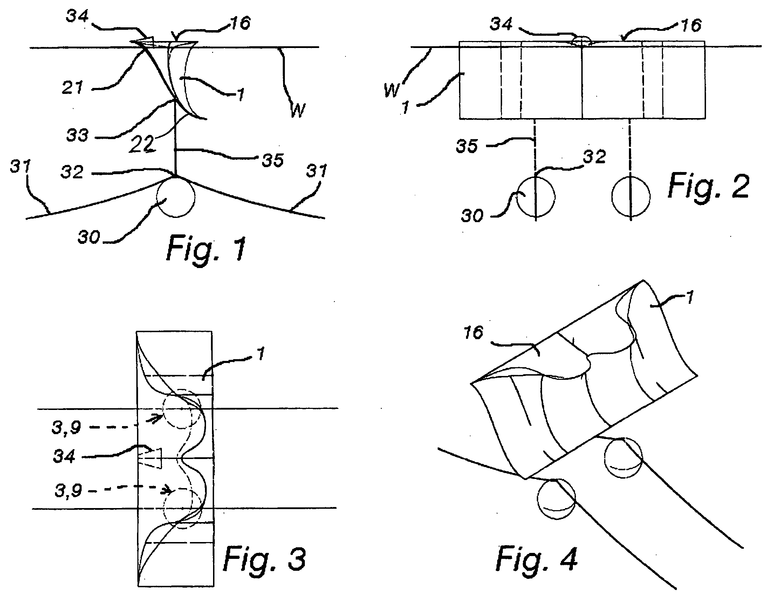

Figures 1 to 4 show a diagrammatic view in principle of a preferred embodiment of the body 1 of the wave power plant. The body 1 is a wall which is mainly vertical, or when in operation, inclined on average in the incoming direction of the wave, and for the most part below the water level W, but with its upper part above the water level. The wall-type shape and mainly vertical or inclined position of the body convert the flow energy of the waves into kinetic energy of the body efficiently and over a large surface area. The draught of the body 1 is preferably dimensioned to correspond to 0.5 x the length of the smallest functional wave desired, thus equalling the movement of the said wave in the vertical direction. The vertical dimension of the submerged part of the body is typically greater than the horizontal dimension of the cross-section. In the preferred embodiment presented, the general shape of the cross-section of the body is a triangle, the shortest leg 16 of which is above water level and one long leg is in the shape of a gently sloping letter S. The body tapers downwards and over 80% of the height of the body is submerged when the body is in calm water. In the exemplary implementation according to the Figures, the upper part 21 of the front side of the body 1 towards the main incoming direction A of the waves is designed to curve forward and the lower part 22 to curve backwards, thus forming a gently sloping letter S in cross-section. In that case, the propagating wave meets the wave of the upper and lower part of the body at different stages, whereby as the wave propagates, the upper end and lower end of the device are mostly at different stages of the wave. In these areas are then generated forces and movement in opposite directions due to buoyancy and the kinetic movement (flow) of the wave. In a small wave, there is practically no wave motion in the lower part of the device, whereupon the stationary water resists the movement of this part. The purpose of the design of the upper part is that the variation in buoyancy caused by the vertical movement of the wave together with the pressure variation caused by the kinetic movement will move the upper part of the body in different directions in stages: up, to the rear, down and to the front. When the lower part is in contact with a part of a wave which is at least mostly at a different stage, the force generated by this kinetic pressure change (flow) moves it mainly in the opposite direction compared to the upper part. When the rotator 3 is located in the upper part of the body 1 and the anchoring point 33 in the lower part of the body, substantial horizotal accelerations are directed at the rotator as the body inclines due to the effect of the internal flow of the wave. The upper surface 16 of the body 1 is made closed.

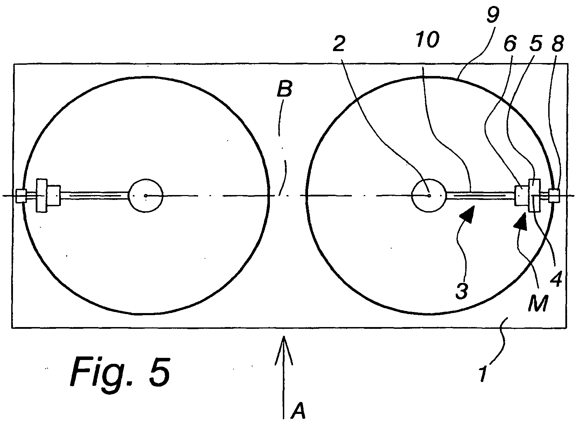

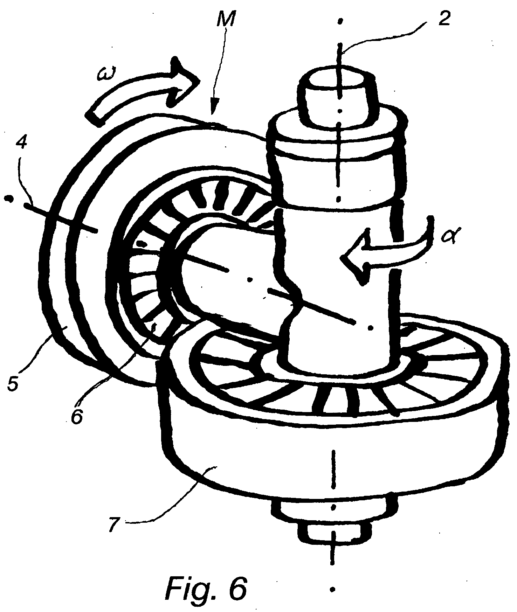

The embodiment shown comprises two of the units described more closely in Figures 5 and 6. The anchoring is preferably fixed to a low-movement position 33 in the lower part of the device, whereby the anchor forces and movements are easy to control. The anchor force participates in bringing about the movement of the body/generating the force and its energy is recovered. In the example case, the anchoring is implemented with weights 30 suspended below the device. In connection with the weights are arranged transversely extending elongated anchoring means 31 which are connected to the bottom of the installation site of the wave power plant. The weights give the anchoring flexibility and form a lower pivot 32 for the system in big waves. In small waves, the pivot is at the anchoring attachment point 33 on the body. With this arrangement, the system adjusts to the energies generated by waves of different sizes. The movements in the system are very small and also the variations in force remain moderate. In addition to the spherical shape shown in the Figures, the weights of the anchoring may also have, for example, a flat or disciform shape, which enhances the utilisation of the anchor force in creating movement and producing energy.

The anchoring weights 30 are preferably hollow, for example, filled partly with concrete and partly with air, whereby they float during transport. When the cavity is filled with water, the weights sink and at the same time pull the floating power plant into the correct position. When the device is removed, the cavities of the weights are filled with air, whereby they will again float to facilitate transport. The power plant itself will then also rise close to the surface, into a horizontal position, in which case the draught is small, thus facilitating, for example, docking. The anchor forces are utilised in energy production. The force is mainly opposite to the direction of movement (force) of the upper front part of the body, whereby it enhances energy production for its part.

The interface of the electric cable (not shown) with the body is preferably also located in a low-movement position in the vicinity of the anchoring point and led to the bottom of the sea following the anchor lines to minimise movements, where its wear is slight. The device may be made large because its width is selectable. The output is as high as several megawatts, the irregularity of the wave forming a certain limit to the width of the body. The height of the body may be, for example, within the range from 10 to 40 m, preferably about 15 to 25 m, and the length, for example, within the range from 30 to 100 m, preferably about 50 to 75 m. These are only examples of the dimensions of the device describing its order of magnitude for making high power output possible. A large size is possible because the forces are converted into electric power inside a closed body.

The counterforce of the wave force in generating the torque is gravitation and gyro force, as well as inertial force which mainly resists horizontal accelerations. The maximum points of gravitation and gyro force alternate and the forces occur simultaneously. The forces used to produce electricity (gravitational force, gyro force and variable acceleration in different directions generated by the wave motion) are internal to the closed body. This makes possible a simple mechanism which is protected from the marine atmosphere and sea water. There are no moving mechanisms outside the closed body.

The dimensions of the device in elevation and in the lateral direction are large compared to the size of the wave, whereby the opposite stages in the wave can be utilised. The device utilises simultaneously the changing buoyancy and the kinetic energy of the wave in all directions. For utilising the changing buoyancy, that is, vertical accelerations, it is preferable to position the vertical rotator shaft 2 slightly to the side, into an inclined position.

The device preferably has a beaching ramp for safely receiving a service boat. Backwards from the upper part of the ramp extends a floating rope which is used via a winch to facilitate beaching. On the incoming direction side of the wave, in front of the ramp, is a shield 34 through which a service entrance is provided.

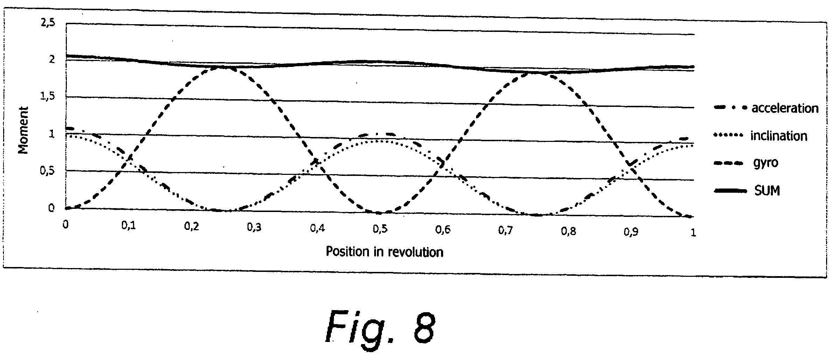

In the embodiment shown in Figure 5, an elongated floating body 1 rolls to and fro around the elongated roll axis B of the body. The roll axis B is at a substantial distance below the orbital plane of the power plant unit's rotators. This distance is at least as long as the rotator arm, or preferably its multiple, so that horizontal accelerations can be utilised efficiently. This is not an actual roll axis, because in different wave conditions and with different ways of anchoring, the location of the roll axis B may vary and it may also move during rolling. What is essential is that as a result of the inclination of the body, the orbital plane of the rotator 3 inclines with respect to the horizontal plane and at the same time reciprocating accelerations are directed at the rotator 3. Due to the design of the floating body as a deeply submerged vertical wall, the moment produced by the inclination and gravity and the moment produced by horizontal acceleration occur at essentially the same time and in the same direction. Their sum moment alternates with the moment produced by the gyro, as shown in Figure 8. By dimensioning the moments suitably with one another, the obtained sum of all three moments is a relatively uniformly acting sum moment. The dimensioning can be influenced, for example, by the mass of the rotator and the length of the rotator arm, as well as by the mass and the speed of rotation of the gyro. During the operation of the wave power plant, the mutual timing and magnitude of the moments can be influenced by regulating the speed of rotation of the gyro and by adjusting the angular position of the rotator with respect to the direction of inclination. The latter can be adjusted by the loading of the generator and also by regulating the speed of rotation of the gyro.

In Figure 5, the incoming direction A of the waves is perpendicular to the roll axis B of the body 1. On the body are positioned two or more power plant units which convert wave energy into electricity. Both power plant units comprise a rotator 3 which rotates on average around a mainly vertical rotator shaft 2. The rotator 3 comprises a gyro 5 which rotates on average around a mainly horizontal gyro shaft 4. The gyro 5 and the gyro shaft 4 rotate around the rotator shaft 2 with the rotator 3. The generator 6 is connected to rotate together with the gyro. The rotator 3 comprises a mass M, the centre of gravity of which is at a distance from the rotator shaft 2, whereupon when the body inclines, the mass M and gyro 5 alternately generate a parallel torque on the rotator 3, as described in greater detail below. The mass M is connected to the rotator shaft 2 with a rotator arm 10 essentially parallel to the axis of rotation 4 of the gyro. The gyro 5 and the generator 6 form the dead mass M partly or completely.

The generator 6 is located on the gyro shaft 4 or connected to be driven by the gyro shaft. The outer end of the rotator 3, which is at a distance from the rotator shaft 2, is provided with a small wheel 8 on which the outer end of the rotator rests and which rotates without sliding along a circular track 9 which surrounds the rotator shaft 2 coaxially. The wheel 8, the gyro 5 and the generator 6 are connected to rotate together. They may be on the same shaft or connected with appropriate transmission ratios to one another. The transmission ratio must be sufficient to give the gyro a speed of rotation which is at least 20 times, typically 40-100 times the speed of rotation of the rotator. In this embodiment, contrary to the embodiment of Figures 5 and 6 described below, the speed of rotation of the gyro is constant with respect to the speed of rotation of the rotator 3 around the rotator shaft 2 and correspondingly constant with respect to the period of the waves. In this embodiment, only one generator 6 is required in each power plant unit. The gyro 5 and the generator 6 may be located close to the outer end of the rotator, whereby they form an essential part of the mass M which rotates the rotator on the basis of gravity, when the mass attempts to move in the direction in which the body is inclined.

The moment of momentum of the rotating gyro 5 also generates a torque enhancing the rotation of the rotator 3 when the rolling of the body 1 turns the gyro shaft 4, whereupon the precession force generates a torque in the rotator, the direction of which is at a 90 degree angle to the direction of turning. The direction of rotation of the gyro must be such that the gyro, as it were, rotates/advances in the direction of rotation of the rotator.

When the angle of inclination of the body 1 is at its largest and its rolling direction turns, the rotator preferably has the direction shown in Figure 1, which is the same as the direction of the roll axis B. In this case, the angle between the direction of the rotator and direction of inclination of the body, that is, the so-called phase lag is 90 degrees. In other words, the rotator is at a 90 degree lag (behind) with respect to the inclination of the body. The mass M then gives the best torque due to the effect of gravity. The gyro 5, on the other hand, does not affect the torque of the rotator 3 on the plane of the track 9 at this stage, because the roll axis B and the gyro shaft 4 are parallel. The moment producing the horizontal acceleration is then at its greatest, because the direction of inclination changes, that is, the deceleration changes to acceleration. Due to the vertical height of the body and the submersion, the body inclines forced by the internal flows of the wave at a different stage than it would if it was inclining in the direction of the surface. As a result of this, the moment of the horizontal acceleration occurs at essentially the same stage as the moment produced by the inclination, whereby they intensify and do not cancel out one another as in known solutions.

When the rotator 3 continues to rotate towards the direction in which the gyro shaft 4 is perpendicular to the roll axis B, the rolling motion turns the gyro shaft increasingly faster. The change of direction of the gyro shaft 4 is at its fastest when the shaft 4 is perpendicular to the roll axis B, whereupon the moment of the gyro force pushes the rotator with its maximum force in the direction of the track 9. The rolling motion of the body is then at its fastest and the plane of the track is essentially horizontal. In that case, the mass M does not increase the torque. The torques of the gyro force and the mass, therefore, alternate at 90 degree angular intervals and are, respectively, at their maximum at angular intervals of 180 degrees, that is, both twice during one revolution of the rotator.

The most powerful operation is thus achieved when the said phase lag is adjusted to 90 degrees. In the intermediate forms, the moment produced by the mass and the moment produced by the gyro on the rotator is proportional to the sine of the phase lag. The phase lag can be adjusted by adjusting the generator 6 load. In the operation of the wave power plant, its output can thus be adjusted by varying the phase lag between 0 to 90 degrees, and in addition by adjusting the speed of rotation of the gyro. In the operating conditions, it is preferable to maintain the set value of the phase lag within the range from 90 to 60 degrees. In other words, in the extreme position of inclination of the body, the aim is to have the direction of the rotator 3 and gyro shaft 4 at a 0 to 40'degree angle to the roll axis B.

The power plant unit according to Figure 6 differs from the power plant unit of Figure 1 mainly in that the actual power take-off generator 7 is mounted on the rotator shaft 2. An electric machine 6' mounted on the gyro shaft 4 functions mainly as a motor, by means of which the gyro 5 is provided the desired speed of rotation, which is regulated, for example, by means of the regulation device shown in Figure 3 (which is described in greater detail below). The main principle is that the stronger the waves, the higher the speed of rotation provided to the gyro 5. The gyro thus acts as a regulator of the dead weight or mass M, which controls the operation of the power plant in accordance with the force of the waves. The solution of Figure 2 differs from Figure 1 also in that the rotation of the gyro 5 and the electric machine 6' is not connected to the rotation of the roll 8 rotating on the track 9, as in Figure 1, but their rotation is regulated for the above purpose.

Adapting the rolling frequency of the body to the wave frequency can be done by regulating the speed of the gyro 5 and the phase angle α of the rotator with respect to the inclination of the body. These provide advantageous and wide-range adjustability.

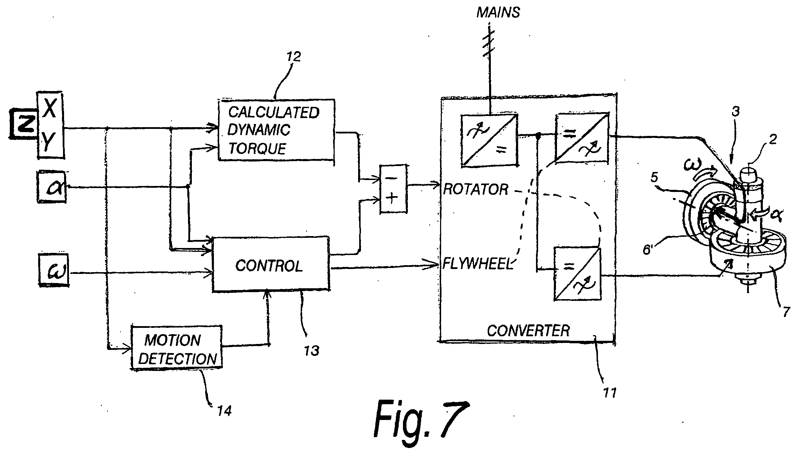

To the control device shown in Figure 7 is entered as input data the X, Y and Z accelerations of the body of the wave power plant, the direction or direction angle α of the rotator 3 with respect to the incoming direction A of the waves, that is, the normal of the roll axis B with maximum inclination of the body, and the angular speed ω of the gyro. The X and Y accelerations are determined flush with the centre of gravity of the rotator mass, when the Z axis is fixed so as to be parallel with the rotator shaft. On the basis of the X, Y and Z accelerations and the direction angle α of the rotator, the unit 12 calculates the dynamic torque, by means of which the mass M aims to turn the rotator around the shaft 2. For optimal operation, it is also important to know the phase lag of the direction angle α of the rotator, that is, the angle between the resultant of the X and Y accelerations and the direction angle α. This is calculated in the control unit 13 on the basis of the X-Y resultant direction given by the motion detection unit 14. If the rolling is uniaxial, as in Figure 5, it suffices to detect only the magnitude of the angle of inclination and direction and magnitude of acceleration with respect to one roll axis B. On the basis of the torque and the phase lag, the unit 15 gives the converter 11 a control signal by means of which the converter regulates the generator 7 load in such a way that the rotator rotates in step with the waves and the phase lag is as desired, for example, 90 degrees. In addition, the phase lag received from the control unit 13 is input data for the part of the converter 11 which regulates the speed of rotation of the gyro 5 via the electric machine 6'. The operation of the converter 11 may be based on frequency converters. The generator 7 supplies electric power to the mains and, if necessary, also directly to the motor 6'. At least in the start-up situation, the motor 6' is also powered by the mains. When the gyro is decelerated, the motor 6' may function as a generator and supply electric power to the mains.

In the embodiments shown, the gyro 5 is located eccentrically with respect to the shaft 2, whereby it forms a part of the eccentric mass M of the rotator. The gyro 5 may also be located concentrically on the rotator shaft 2 which, however, increases the overall weight of the power plant unit, because in that case a corresponding increase of dead mass is required at a distance from the shaft 2. The direction of the shaft 2 changes to different sides of the vertical direction depending on the degree of inclination of the body. It may, therefore, be said that the shaft 2 is on average mainly vertical. In the same way, the gyro shaft 4 is on average mainly horizontal. When the power plant stands in calm water, shaft 2 is essentially vertical and shaft 4 essentially horizontal. The shaft 2 may, however, be slightly inclined to the side or in the front-rear direction in order to be able to utilise vertical accelerations better.

## Claims

1. A method for converting the energy of water waves into electricity by means of a wave power plant, which comprises a floating body (1), a rotator (3) which is supported on the body and rotates around a rotator shaft (2) which is on average vertical or slightly inclined to the side, a gyro (5) which rotates around a gyro shaft (4) which is on average horizontal, the gyro and the gyro shaft rotating with the rotator around the rotator shaft (2), and at least one generator (6), which is connected to rotate together with the gyro or the rotator, the method including the following stages:
the floating body is rolled by means of waves in step with the waves the gyro (5) is rotated around the gyro shaft (4)
the inclination of the gyro shaft (4) with respect to the horizontal plane is caused as a result of the rolling motion, and
the rotation of the rotator (3) is influenced by the torque of the gyro (5),
which follows from the inclination of the gyro shaft, **characterised in that** by means of the rotator's mass (M) are produced moments rotating the rotator in the same direction at the same stage on the one hand by means of the inclination moment generated by the inclination of the body and gravitation,
and on the other hand by means of the acceleration moment generated by the horizontal acceleration of the rotator shaft (2), that the said inclination and acceleration are caused by rolling the body in a direction deviating from the rolling direction according to the direction of the wave surface, which is achieved by directing the internal flows of the wave at the submerged part of the body (1), which is a mainly vertical, or when in operation, a wall inclined on average in the incoming direction of the wave, which is transverse to the direction of travel of the waves, that the lower part of the body is influenced by anchor force which takes part in inclining the body and causing acceleration, and that the moment generated by gyro force is used to equalize the said inclination and acceleration moments during the revolution and the kinetic energy of the gyro is used as an energy reserve to equalize the effective output of the wave power plant.

2. A method as claimed in claim 1, **characterised in that** the horizontal acceleration is enhanced by moving the level of the orbital track of the mass upwards to a distance equalling at least the radius of the orbital track from the roll axis of the body.

3. A method as claimed in claim 1 or 2, **characterised in that** the gyro is rotated at a speed of rotation which is more than 20 times, preferably more than 40 times greater than the speed of rotation of the rotator.

4. A method as claimed in any of the claims 1 to 3, **characterised in that** the phase lag of the rotation of the rotator, that is, the angle between the direction (α) of the rotator and the direction of the inclination of the body is adjusted in such a way that the peak of the torque of the gyro coincides with the minimum point of the inclination and acceleration moments.

5. A method as claimed in any of the claims 1 to 4, **characterised in that** the phase lag of the rotation of the rotator, that is, the angle between the direction (α) of the rotator and the direction of the inclination of the body is adjusted by adjusting the generator (6, 7) load.

6. A method as claimed in any of the claims 1 to 5, **characterised in that** the phase lag, that is, the set value of the direction of the rotator is adjustable within a range of 0-90 degrees, and that the aim is to keep the direction (α) of the rotator (3) 0-90 degrees, preferably 60-90 degrees behind the direction of rotation of the body (1).

7. A method as claimed in any of the claims 1 to 6, **characterised in that** the output of the wave power plant is adjusted by varying the phase lag, that is, the angle between the direction (α) of the rotator and the direction of the inclination of the body within 0-90 degrees and in addition by regulating the speed of rotation of the gyro.

8. A wave power plant, which comprises a floating body (1), a rotator (3) which is supported on the body and rotates around a rotator shaft (2) which is on average vertical or slightly inclined to the side, a gyro (5) which rotates around a gyro shaft (4) which is on average horizontal, the gyro and the gyro shaft rotating with the rotator around the rotator shaft (2), and at least one generator (6, 7), which is connected to rotate together with the gyro or the rotator, **characterised in that** the submerged part of the body (1) is a mainly vertical, or when in operation, a wall inclined on average in the incoming direction of the wave, which is transverse to the direction of travel of the waves and extends so deep down that the internal flows of the wave occurring at different heights of the body cause the body to incline in a direction deviating from the rolling direction according to the direction of the wave surface, that the rotator is located in the upper part of the body and the anchoring point in the lower part of the body to utilise the anchor force for producing the movement of the body, that the rotator (3) comprises a mass (M), the centre of gravity of which is at a distance from the rotator shaft (2), and the orbital plane of the orbital track of the said centre of gravity is at least at the said distance from the anchoring point (33) of the body, whereby when the body inclines, the mass generates cophasal torques by the effect of both gravity and the horizontal acceleration of the rotator shaft in order to rotate the rotator, and that the gyro is arranged to be used as an equalizer of the said torques during the revolution and as an energy reserve to equalize the effective output of the wave power plant.

9. A wave power plant as claimed in claim 8, **characterised in that** the gyro (5) is arranged to be rotated at a speed of rotation which is more than 20 times, preferably more than 40 times greater than the speed of rotation of the rotator, and that the speed of rotation of the gyro is arranged to be actively adjustable within each revolution of the rotator.

10. A wave power plant as claimed in claim 8 or 9, **characterised in that** the mass (M) is connected to the rotator shaft (2) with an arm (10) essentially parallel to the axis of rotation (4) of the gyro.

11. A wave power plant as claimed in any of the claims 8 to 10, **characterised in that** the generator (6) is located on the gyro shaft (4) or connected to be driven by the gyro shaft, and the outer end of the rotator (3), which is at a distance from the rotator shaft (2), is provided with a small wheel (8) on which the outer end of the rotator rests and which rotates along a circular track (9) which surrounds the rotator shaft (2) coaxially.

12. A wave power plant as claimed in claim 11, **characterised in that** the wheel (8), the gyro (5) and the generator (6) are connected to rotate together.

13. A wave power plant as claimed in any of the claims 8 to 12, **characterised in that** the generator load is arranged to be adjusted by a control device which determines the phase lag of the direction of the rotator, that is, the angle between the direction (α) of the rotator and the direction of inclination of the body, and that the set value of the phase lag is adjustable.

14. A wave power plant as claimed in any of the claims 8 to 13, **characterised in that** when the wave power plant is in operation, the elongated body (1) rolls to and fro with respect to one roll axis (B), that the wave power plant comprises a control device with which the generator load and/or the speed of rotation of the gyro are arranged to be adjusted, and that in the extreme position of inclination of the body, the aim is to have the direction of the rotator (3) and gyro shaft (4) at a 0 to 40 degree angle to the roll axis (B), that is, the set value of the angle between the direction of the rotator and the direction of inclination of the body, that is, of the phase lag, is 90 to 60 degrees.

15. A wave power plant as claimed in any of the claims 8 to 14, **characterised in that** the general shape of the cross-section of the body is a triangle, the shortest leg (16) of which is above water level and one long leg is in the shape of a gently sloping letter S, that the body tapers downwards and over 80% of the height of the body is below water level (W) when the body is anchored ready for use in calm water.

## Patentansprüche

1. Verfahren zur Umwandlung der Energie von Wasserwellen in elektrische Energie mit Hilfe eines Wellenkraftwerks, das einen Schwimmkörper (1), eine Rotationsvorrichtung (3), die auf dem Körper abgestützt wird und die um einen Schaft der Rotationsvorrichtung (2), der in der Regel vertikal oder leicht zur Seite geneigt verläuft, rotiert, einen Kreisel (5), der um einen Kreiselschaft (4), der in der Regel horizontal verläuft, rotiert, wobei der Kreisel und der Kreiselschaft mit der Rotationsvorrichtung um den Schaft der Rotationsvorrichtung (2) rotieren, und schließlich einen Generator (6), der verbunden ist, um zusammen mit dem Kreisel oder der Rotationsvorrichtung zu rotieren, aufweist, wobei das Verfahren folgende Schritte enthält:
der Schwimmkörper wird mit Hilfe von Wellen im Einklang mit den Wellen gerollt, der Kreisel (5) wird um den Kreiselschaft (4) in Rotation versetzt,
die Neigung des Kreiselschafts (4) gegenüber der horizontalen Ebene entsteht als Ergebnis der Rollbewegung, und
die Rotation der Rotationsvorrichtung (3) wird durch das Drehmoment des Kreisels (5) beeinflusst, das aus der Neigung des Kreiselschafts folgt, **dadurch gekennzeichnet, dass** Momente mit Hilfe der Masse (M) der Rotationsvorrichtung erzeugt werden, die die Rotationsvorrichtung einerseits mit Hilfe des Neigungsmoments, der durch die Neigung des Körpers und der Schwerkraft erzeugt wird, und andererseits mit Hilfe des Beschleunigungsmomentes, das durch die horizontale Beschleunigung des Schafts der Rotationsvorrichtung (2) erzeugt wird, im selben Schritt in dieselbe Richtung in Rotation versetzen, dass die Neigung und Beschleunigung durch das Rollen des Körpers in eine Richtung verursacht werden, welche von der Rollrichtung gemäß der Richtung der Wellenoberfläche abweicht, was erreicht wird durch das Richten der inneren Ströme der Welle am eingetauchten Teil des Körpers (1), der im Wesentlichen eine vertikale Wand, oder im Betrieb eine Wand, die in der Regel in die Anlaufrichtung der Welle, die quer zur Laufrichtung der Wellen verläuft, geneigt ist, dass der untere Teil des Körpers durch Ankerkraft beeinflusst wird, die beim Neigen des Körpers auftritt und Beschleunigung verursacht, dass das durch Kreiselkraft erzeugte Moment verwendet wird, um die Neigungs- und Beschleunigungsmomente während des Umlaufs auszugleichen und die kinetische Energie des Kreisels als Energiereserve verwendet wird, um die Nennleistung des Wellenkraftwerks auszugleichen.

2. Verfahren nach Anspruch 1, **dadurch gekennzeichnet, dass** die horizontale Beschleunigung durch die Bewegung der Höhe der Umlaufstrecke der Masse nach oben auf eine Entfernung, die mindestens gleich dem Radius der Umlaufstrecke von der Rollachse des Körpers ist, verstärkt wird.

3. Verfahren nach Anspruch 1 oder 2, **dadurch gekennzeichnet, dass** der Kreisel bei einer Rotationsgeschwindigkeit rotiert, die mehr als 20 Mal, vorzugsweise mehr als 40 Mal größer ist als die Rotationsgeschwindigkeit der Rotationsvorrichtung.

4. Verfahren nach einem der Ansprüche 1 bis 3, **dadurch gekennzeichnet, dass** die Phasenverzögerung der Rotation der Rotationsvorrichtung, das heißt der Winkel zwischen der Richtung (a) der Rotationsvorrichtung und der Neigungsrichtung des Körpers, derart eingestellt wird, dass der Spitzenwert des Drehmoments des Kreisels mit dem Minimalpunkt der Neigungs- und Beschleunigungsmomente übereinstimmt.

5. Verfahren nach einem der Ansprüche 1 bis 4, **dadurch gekennzeichnet, dass** die Phasenverzögerung der Rotation der Rotationsvorrichtung, das heißt der Winkel zwischen der Richtung (a) der Rotationsvorrichtung und der Neigungsrichtung des Körpers durch das Einstellen der Generatorlast (6, 7) eingestellt wird.

6. Verfahren nach einem der Ansprüche 1 bis 5, **dadurch gekennzeichnet, dass** die Phasenverzögerung, das heißt der festgelegte Wert der Richtung der Rotationsvorrichtung, innerhalb eines Bereichs von 0-90 Grad einstellbar ist und dass das Ziel darin besteht, die Richtung (a) der Rotationsvorrichtung (3) bei 0-90 Grad, vorzugsweise 60-90 Grad hinter der Rotationsrichtung des Körpers (1) zu halten.

7. Verfahren nach einem der Ansprüche 1 bis 6, **dadurch gekennzeichnet, dass** die Leistung des Wellenkraftwerks durch das Verändern der Phasenverzögerung, das heißt, dem Winkel zwischen der Richtung (a) der Rotationsvorrichtung und der Neigungsrichtung des Körpers zwischen 0-90 Grad und außerdem durch das Einstellen der Rotationsgeschwindigkeit des Kreisels eingestellt wird.

8. Wellenkraftwerk, das einen Schwimmkörper (1), eine Rotationsvorrichtung (3), die auf dem Körper abgestützt wird und um den Schaft der Rotationsvorrichtung (2), der in der Regel vertikal oder leicht zur Seite geneigt verläuft, rotiert, einen Kreisel (5), der um einen Kreiselschaft (4), der in der Regel horizontal verläuft, rotiert, wobei der Kreisel und der Kreiselschaft mit der Rotationsvorrichtung um den Schaft der Rotationsvorrichtung (2) rotieren, und schließlich einen Generator (6, 7), der verbunden ist, um zusammen mit dem Kreisel oder der Rotationsvorrichtung zu rotieren, aufweist, **dadurch gekennzeichnet, dass** der eingetauchte Teil des Körpers (1) eine im Wesentlichen vertikale Wand oder im Betrieb eine Wand, die in der Regel in die Anlaufrichtung der Welle, die quer zur Laufrichtung der Wellen verläuft, geneigt ist und sich so tief nach unten erstreckt, dass die internen Ströme der Welle, die auf verschiedenen Höhen des Körpers auftreten, bewirken, dass der Körper sich in eine Richtung neigt, die von der Rollrichtung gemäß der Richtung der Wellenoberfläche abweicht, dass die Rotationsvorrichtung sich im oberen Teil des Körpers und der Ankerpunkt sich im unteren Teil des Körpers befindet, um die Ankerkraft zu verwenden, um die Bewegung des Körpers zu erzeugen, dass die Rotationsvorrichtung (3) eine Masse (M) aufweist, deren Schwerpunkt sich in einer Entfernung von der Welle der Rotationsvorrichtung (2) befindet, und die Umlaufebene der Umlaufstrecke des Schwerpunktes sich mindestens in dem Abstand von dem Ankerpunkt (33) des Körpers befindet, wodurch, wenn der Körper sich neigt, die Masse durch die Wirkung sowohl der Schwerkraft und der horizontalen Beschleunigung des Schafts der Rotationsvorrichtung gleichphasige Drehmomente erzeugt, um die Rotationsvorrichtung in Rotation zu versetzen und dass der Kreisel angeordnet ist, um als Ausgleichsvorrichtung der Drehmomente während des Umlaufs und als Energiereserve zum Ausgleichen der Nennleistung des Wellenkraftwerks verwendet zu werden.

9. Wellenkraftwerk nach Anspruch 8, **dadurch gekennzeichnet, dass** der Kreisel (5) ausgestaltet ist, um in einer Rotationsgeschwindigkeit in Rotation versetzt zu werden, die mehr als 20 Mal, vorzugsweise mehr als 40 Mal größer ist als die Rotationsgeschwindigkeit der Rotationsvorrichtung und dass die Rotationsgeschwindigkeit des Kreisels ausgestaltet ist, um aktiv innerhalb jedes Umlaufs der Rotationsvorrichtung eingestellt werden zu können.

10. Wellenkraftwerk nach Anspruch 8 oder 9, **dadurch gekennzeichnet, dass** die Masse (M) mit einem Arm (10), der im Wesentlichen parallel zu der Rotationsachse (4) des Kreisels verläuft, mit den Schaft der Rotationsvorrichtung (2) verbunden ist.

11. Wellenkraftwerk nach einem der Ansprüche 8 bis 10, **dadurch gekennzeichnet, dass** der Generator (6) sich auf dem Kreiselschaft (4) befindet und verbunden ist, um von dem Kreiselschaft angetrieben zu werden und das äußere Ende der Rotationsvorrichtung (3), das von der Welle der Rotationsvorrichtung (2) beabstandet ist, mit einem kleinen Rad (8) versehen ist, auf dem das äußere Ende der Rotationsvorrichtung ruht und das entlang einer Umlaufbahn (9), die die Welle der Rotationsvorrichtung (2) koaxial umgibt, rotiert.

12. Wellenkraftwerk nach Anspruch 11, **dadurch gekennzeichnet, dass** das Rad (8), der Kreisel (5) und der Generator (6) verbunden sind, um gemeinsam zu rotieren.

13. Wellenkraftwerk nach einem der Ansprüche 8 bis 12, **dadurch gekennzeichnet, dass** die Generatorlast ausgestaltet ist, um durch eine Steuervorrichtung, die die Phasenverzögerung der Richtung der Rotationsvorrichtung, das heißt den Winkel zwischen der Richtung (a) der Rotationsvorrichtung und der Neigungsrichtung des Körpers, festlegt, eingestellt zu werden, und dass der festgelegte Wert der Phasenverzögerung einstellbar ist.

14. Wellenkraftwerk nach einem der Ansprüche 8 bis 13, **dadurch gekennzeichnet, dass**, wenn das Wellenkraftwerk in Betrieb ist, der längliche Körper (1) in Bezug auf eine Rollachse (B) hin und her rollt, dass das Wellenkraftwerk eine Steuervorrichtung aufweist, mit der die Generatorlast und/oder die Rotationsgeschwindigkeit des Kreisels eingestellt werden können, und dass in der äußersten Neigungsposition des Körpers das Ziel darin besteht, dass die Richtung der Rotationsvorrichtung (3) und des Kreiselschafts (4) sich in einem 0 bis 40 Grad-Winkel zu der Rollachse (B) befindet, das heißt, der festgelegte Wert des Winkels zwischen der Richtung der Rotationsvorrichtung und der Neigungsrichtung des Körpers, das heißt der Phasenverzögerung, 90 bis 60 Grad beträgt.

15. Wellenkraftwerk nach einem der Ansprüche 8 bis 14, **dadurch gekennzeichnet, dass** die allgemeine Form des Querschnitts des Körpers ein Dreieck ist, wobei der kürzeste Schenkel (16) sich oberhalb des Wasserspiegels befindet und ein langer Schenkel die Form eines sanft geschwungenen Buchstabens S aufweist, dass der Körpers sich nach unten verjüngt und mehr als 80% der Höhe des Körpers sich unter dem Wasserspiegel (W) befindet, wenn der Körper verankert ist, um in ruhigem Wasser verwendet zu werden.

## Revendications

1. Procédé pour convertir l'énergie des vagues en électricité au moyen d'une centrale houlomotrice, qui comprend un corps flottant (1), un rotateur (3) qui est supporté sur le corps et tourne autour d'un arbre de rotateur (2) qui est en moyenne vertical ou légèrement incliné vers le côté, un gyroscope (5) qui tourne sur un arbre de gyroscope (4) qui est en moyenne horizontal, le gyroscope et l'arbre de gyroscope tournant avec le rotateur autour de l'arbre de rotateur (2), et au moins un générateur (6) qui est relié pour tourner conjointement avec le gyroscope ou le rotateur, le procédé comprenant les étapes suivantes :
le corps flottant est roulé au moyen des vagues au pas des vagues
le gyroscope (5) est tourné sur l'arbre de gyroscope (4)
l'inclinaison de l'arbre de gyroscope (4) par rapport au plan horizontal est provoquée du fait du mouvement de roulis, et
la rotation du rotateur (3) est influencée par le moment du gyroscope (5) qui provient de l'inclinaison de l'arbre de gyroscope, **caractérisé en ce qu'**au moyen de la masse (M) du rotateur, des moments sont produits faisant tourner le rotateur dans la même direction au même niveau d'une part au moyen du moment d'inclinaison généré par l'inclinaison du corps et la gravitation, et d'autre part au moyen du moment d'accélération généré par l'accélération horizontale de l'arbre de rotor (2), que lesdites inclinaison et accélération sont provoquées par le roulis du corps dans une direction s'écartant de la direction de roulis selon la direction de la surface de la vague,
qui est obtenue en dirigeant les flots internes de la vague à la partie submergée du corps (1) qui est une paroi principalement verticale, ou lorsqu'elle fonctionne, une paroi inclinée en moyenne dans la direction d'arrivée de la vague, qui est transversale à la direction de déplacement des vagues, que la partie inférieure du corps est influencée par la force d'ancrage qui contribue à incliner le corps et provoque l'accélération, et que le moment généré par la force gyroscopique est employé pour égaliser lesdits moments d'inclinaison et d'accélération pendant la révolution et l'énergie cinétique du gyroscope est employée en tant que réserve d'énergie pour égaliser le rendement effectif de la centrale houlomotrice.

2. Procédé selon la revendication 1, **caractérisé en ce que** l'accélération horizontale est augmentée en déplaçant le niveau du chemin orbital de la masse vers le haut à une distance au moins égale au rayon du chemin orbital depuis l'axe de roulis du corps.

3. Procédé selon la revendication 1 ou 2, **caractérisé en ce que** le gyroscope est tourné à une vitesse de rotation qui est 20 fois, de préférence 40 fois plus élevée que la vitesse de rotation du rotateur.

4. Procédé selon l'une quelconque des revendications 1 à 3, **caractérisé en ce que** le déphasage de la rotation du rotateur, c'est à dire l'angle entre la direction (α) du rotateur et la direction d'inclinaison du corps est ajusté de telle façon que le pic de couple du gyroscope coïncide avec le point minimal des moments d'inclinaison et d'accélération.

5. Procédé selon l'une quelconque des revendications 1 à 4, **caractérisé en ce que** le déphasage de la rotation du rotateur, c'est à dire l'angle entre la direction (α) du rotateur et la direction d'inclinaison du corps est ajusté en ajustant la charge du générateur (6, 7).

6. Procédé selon l'une quelconque des revendications 1 à 5, **caractérisé en ce que** le déphasage, c'est à dire la valeur de consigne de direction du rotateur, peut être ajusté dans une plage de 0 - 90 degrés et que le but est de maintenir la direction (α) du rotateur (3) à 0 - 90 degrés, de préférence à 60 - 90 derrière la direction de rotation du corps (1).

7. Procédé selon l'une quelconque des revendications 1 à 6, **caractérisé en ce que** le rendement de la centrale houlomotrice est ajusté en variant le déphasage, c'est à dire l'angle entre la direction (α) du rotateur et la direction d'inclinaison du corps de 0 - 90 degrés et en outre en réglant la vitesse de rotation du gyroscope.

8. Centrale houlomotrice qui comprend qui comprend un corps flottant (1), un rotateur (3) qui est supporté sur le corps et tourne autour d'un arbre de rotateur (2) qui est en moyenne vertical ou légèrement incliné vers le côté, un gyroscope (5) qui tourne sur un arbre de gyroscope (4) qui est en moyenne horizontal, le gyroscope et l'arbre de gyroscope tournant avec le rotateur autour de l'arbre de rotateur (2), et au moins un générateur (6, 7) qui est relié pour tourner conjointement avec le gyroscope ou le rotateur, **caractérisée en ce que** la partie submergée du corps (1) est une paroi principalement verticale, ou lorsqu'elle fonctionne, inclinée en moyenne dans la direction d'arrivée de la vague, qui est transversale à la direction de déplacement des vagues et s'étend si bas que les flots internes de la vague se produisant à différentes hauteurs du corps font s'incliner le corps dans une direction s'écartant de la direction de roulis selon la direction de la surface des vagues, que le rotateur est situé dans la partie supérieure du corps et le point d'ancrage dans la partie inférieure du corps pour employer la force d'ancrage pour produire le mouvement du corps, que le rotateur (3) comprend une masse (M) dont le centre de gravité est à une distance de l'arbre de rotateur (2), et le plan orbital du chemin orbital dudit centre de gravité est au moins à ladite distance du point d'ancrage (33) du corps, ce par quoi lorsque le corps s'incline, la masse génère des couples en cophase par l'effet à la fois de la gravité et de l'accélération horizontale de l'arbre de rotateur afin de faire tourner le rotateur, et que le gyroscope est agencé pour être utilisé en tant qu'égaliseur desdits couples pendant la révolution et en tant que réserve d'énergie pour égaliser le rendement effectif de la centrale houlomotrice.

9. Centrale houlomotrice selon la revendication 8, **caractérisée en ce que** le gyroscope (5) est agencé pour être tourné à une vitesse de rotation qui est 20 fois, de préférence 40 fois plus élevée que la vitesse de rotation du rotateur et que la vitesse de rotation du gyroscope est agencée pour être ajustable de façon active dans chaque révolution du rotateur.

10. Centrale houlomotrice selon la revendication 8 ou 9 **caractérisée en ce que** la masse (M) est reliée à l'arbre de rotateur (2) par un bras (10) essentiellement parallèle à l'axe de rotation (4) du gyroscope.

11. Centrale houlomotrice selon l'une quelconque des revendications 8 à 10, **caractérisée en ce que** le générateur (6) est placé sur l'arbre de gyroscope (4) ou relié pour être entraîné par l'arbre de gyroscope, et l'extrémité extérieure du rotateur (3) qui est à distance de l'arbre de rotateur (2) est dotée d'une petite roue (8) sur laquelle l'extrémité extérieure du rotateur repose et qui tourne le long d'un trajet circulaire (9) qui entoure l'arbre de rotor (2) coaxialement.

12. Centrale houlomotrice selon la revendication 11 **caractérisée en ce que** la roue (8), le gyroscope (5) et le générateur (6) sont reliés pour tourner ensemble.

13. Centrale houlomotrice selon l'une quelconque des revendications 8 à 12, **caractérisée en ce que** la charge du générateur est agencée pour être ajustée par un dispositif de commande qui détermine le déphasage de la direction du rotateur, c'est à dire, l'angle entre la direction (α) du rotateur et la direction d'inclinaison du corps, et que la valeur de consigne du déphasage est ajustable.

14. Centrale houlomotrice selon l'une quelconque des revendications 8 à 13, **caractérisée en ce que** lorsque la centrale houlomotrice fonctionne, le corps allongé (1) tourne en va-et-vient par rapport à un axe de roulis (B), que la centrale houlomotrice comprend un dispositif de commande avec lequel la charge du générateur et/ou la vitesse de rotation du gyroscope est/sont agencée(s) pour être ajustée(s), et que dans la position d'inclinaison extrême du corps, le but est d'avoir la direction du rotateur (3) et de l'arbre de gyroscope (4) à un angle de 0 à 40 degrés par rapport à l'axe de roulis (B), c'est à dire que la valeur de consigne de l'angle entre la direction du rotateur et la direction d'inclinaison du corps, c'est à dire, du déphasage, est de 90 à 60 degrés.

15. Centrale houlomotrice selon l'une quelconque des revendications 8 à 14, **caractérisée en ce que** la forme générale de la section transversale du corps est un triangle dont le côté le plus court (16) est au-dessus du niveau de l'eau et un long côté à la forme d'une lettre S légèrement en pente, que le corps devient conique vers le bas et que plus de 80 % de la hauteur du corps est en-dessous du niveau de l'eau (W) lorsque le corps est ancré prêt à être utilisé en eau calme.
